(19) Europäisches Patentamt
European Patent Office
Office européen des brevets

(11) Veröffentlichungsnummer: **0 096 656**
**B1**

(12) **EUROPÄISCHE PATENTSCHRIFT**

(45) Veröffentlichungstag der Patentschrift: **23.10.85**

(21) Anmeldenummer: **83810228.3**

(22) Anmeldetag: **01.06.83**

(51) Int. Cl.⁴: **A 01 N 57/16,** A 01 N 57/12 // (A01N57/16, 53:00),(A01N57/12, 53:00)

(54) **Schädlingsbekämpfungsmittel.**

(30) Priorität: **07.06.82 CH 3505/82**

(43) Veröffentlichungstag der Anmeldung: **21.12.83 Patentblatt 83/51**

(45) Bekanntmachung des Hinweises auf die Patenterteilung: **23.10.85 Patentblatt 85/43**

(84) Benannte Vertragsstaaten: **CH DE FR IT LI SE**

(56) Entgegenhaltungen:
**DE - A - 2 850 795**
**GB - A - 1 583 847**

(73) Patentinhaber: **CIBA-GEIGY AG, Postfach, CH-4002 Basel (CH)**

(72) Erfinder: **Dittrich, Volker, Dr., Panoramaweg 433, CH-4314 Zeiningen (CH)**

**EP 0 096 656 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft neue Schädlingsbekämpfungsmittel, die als aktive Komponente Wirkstoffkombinationen enthalten, ihre Verwendung zur Bekämpfung von Schädlingen, insbesondere von Insekten sowie von Vertretern der Ordnung Acarina, und die Herstellung dieser Mittel.

Die Bekämpfung von Schädlingen ist gegenwärtig in wachsendem Maße Schwierigkeiten ausgesetzt. Dabei spielen sowohl die Resistenzbildung bei den zu bekämpfenden Schädlingen gegen die im Einsatz befindlichen Schädlingsbekämpfungsmittel als auch die durch die Steigerung der angewendeten Wirkstoffkonzentrationen verursachte Umweltbelastung eine wesentliche Rolle. Zur Vermeidung nachteiliger Folgen für die Umwelt muß deshalb eine Reduktion der Aufwandmengen chemischer Substanzen angestrebt werden. Andererseits wird durch die Verwendung von niederen Wirkstoffkonzentrationen, die keine Gewähr für die restlose Vernichtung der Schädlingspopulationen einschließlich ihrer Entwicklungsstadien bieten, das Aufkommen von resistenten Schädlingsarten begünstigt.

Zur Vermeidung dieser Nachteile ist es deshalb wünschenswert, für die Bekämpfung von Schädlingen, wie Insekten und Acarina, Mittel bereitzustellen, die bereits bei geringen Aufwandmengen eine ausreichende Wirksamkeit erzielen und dabei weder die Bildung von Resistenzen fördern noch eine Belastung der Umwelt darstellen. So ist bereits mehrfach der Versuch unternommen worden, durch Kombination von verschiedenen Substanzen unter Ausnutzung der dabei auftretenden Potenzierungseffekte diesen Forderungen gerecht zu werden. Mischungen von Verbindungen aus verschiedenen Substanzklassen, wie beispielsweise Pyrethrinen, Pyrethroiden, Carbamaten und Phosphorsäureestern, sind als synergistisch wirksame Präparate auf dem Pestizidgebiet bereits beschrieben worden. Es hat sich jedoch gezeigt, daß die bekannten Kombinationspräparate die in der Praxis an sie gestellten Forderungen vor allem betreffend Wirksamkeit, Toxizität und Wirtschaftlichkeit nicht in jedem Fall im gewünschten Maße erfüllen.

Es wurden nun neue synergistisch wirkende Kombinationen bestehend entweder aus der Verbindung S-[6-Chlor-oxazolo[4,5-b]pyridin-2(3H)-on-3-yl-methyl]-O,O-dimethyl-thiophosphat der Formel I

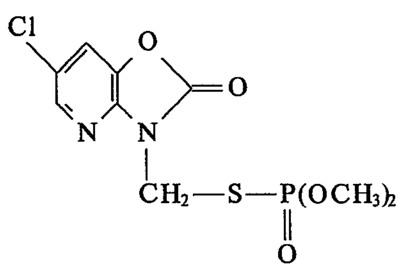

(I)

oder aus der Verbindung $(CH_3O)_2P(S){-}OCH{=}C(CH_3)C(O)OCH_3$ der Formel II

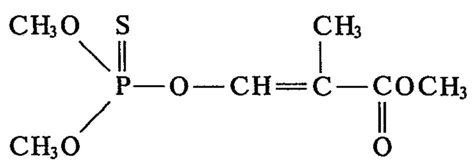

(II)

und der Verbindung 1(RS)-cis,trans-3-(2,2-Dichlorvinyl)-2,2-dimethylcyclopropancarbonsäure-(RS)-($\alpha$-cyan-3-phenoxybenzyl)ester der Formel III

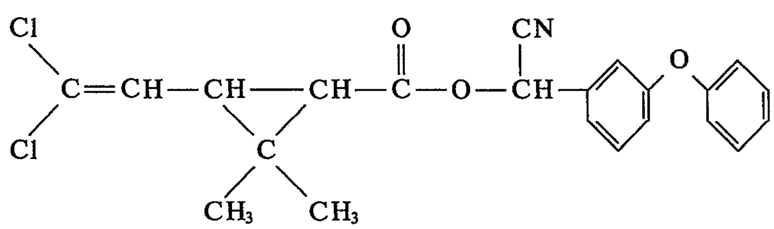

(III)

gefunden, die eine breite biozide Wirksamkeit entfalten, und in Form neuer erfindungsgemäßer Mittel angewendet werden können.

Die Substanz der Formel III stellt ein Gemisch aus cis- und trans-Isomeren dar, wobei das Verhältnis von cis- zu trans-Formen hoch oder niedrig sein kann.

Die erfindungsgemäße Wirkstoffkombination wird zur Kontrolle von verschiedenartigen Schädlingen eingesetzt. Sie eignet sich vor allem zur Bekämpfung von Vorrats- und Speicherschädlingen aus den Ordnungen: Coleopteren, Lepidopteren und Acarina. Auch Hygieneschädlinge aus den Ordnungen Diptera und Blattaria können erfolgreich bekämpft werden.

Die einzelnen Komponenten der erfindungsgemäßen Wirkstoffkombinationen sind als Pestizide bekannt und lassen sich nach bekannten Methoden herstellen. Die Verbindungen der Formeln I und II sind in der DE-AS Nr. 21 31 734 bzw. der DE-AS Nr. 21 19 488 beschrieben und unter den Bezeichnungen Alfacron® bzw. Damfin® bekannt, während die Verbindung der Formel III unter dem Namen Cypermethrin im Pesticide Manual, 6th Edition, 1979, publiziert ist.

Für die in den erfindungsgemäßen Mitteln maßgebenden Gewichtsverhältnisse der Wirkstoffkombination der Verbindungen I zu III gilt der Bereich von 5000 : 1 bis 1 : 1. Für die Entfaltung der synergistischen Wirkung ist das Kombinationsverhältnis im Bereich von 1500 : 1 bis 1 : 1 als besonders geeignet und darunter der Bereich von 300 : 1 bis 1 : 1 als bevorzugt wirksam anzusehen.

Für die in den erfindungsgemäßen Mitteln maßgebenden Gewichtsverhältnisse der Wirkstoffkombination der Verbindungen II zu III gilt der Bereich von 3500 : 1 bis 1 : 1. Für die Entfaltung der synergistischen Wirkung ist das Kombinationsverhältnis im Bereich von 1000 : 1 bis 1 : 1 als besonders geeignet und darunter der Bereich von 500 : 1 bis 1 : 1 als bevorzugt wirksam anzusehen.

Die Wirkstoffkombinationen können außer als Anteil in den erfindungsgemäßen Mitteln auch allein eingesetzt werden. Ihr Anteil in den erfindungsgemäßen Mitteln beträgt 1 bis 90 Gew.-% neben 99 bis 10 Gew.-% Trägerstoffen und Formulierungshilfsmitteln.

Die den erfindungsgemäßen Mitteln zugrundeliegende Erfindung wird anhand des folgenden Beispiels näher erläutert. Dabei wird die biozide Wirksamkeit der Wirkstoffkombination mittels der topikalen Applikationsmethode bestimmt und daraus der Potenzierungseffekt errechnet.

## Beispiel 1

40 Fliegen (Musca domestica♀♀) einer homogenen Population des hoch-resistenten Stammes R-300 wurden durch Aufbringen von je 1 µl azetonischer Wirkstofflösung pro ♀ Fliege dorsal behandelt. Je 10 Individuen wurden zusammen mit einem mit Honig-Wasser getränkten Wattebausch in Petrischalen von 9 cm Durchmesser bei Raumtemperatur gehalten. Nach 24 Stunden erfolgte die Auswertung durch Feststellen der prozentualen Abtötungsrate. Dieses Prozedere wurde für jede einzelne Wirkstoffkomponente und ihre Kombination getrennt durchgeführt. Durch Anwendung einer logarithmisch abgestuften Konzentrationsreihe wurden steigende Abtötungswerte erhalten, aus denen mit der Probit-Analyse nach Finney[1]) eine Dosis-Mortalitäts-Gerade berechnet wurde. Die $LD_{50}$-Werte wurden auf diese Art ermittelt.

## Auswertung

Mit Hilfe dieser Werte wurde die Potenzierungsrate (PR) als Maß für den in Erscheinung tretenden Synergismus mittels der Cotox-Formel ermittelt[2]). Die Potenzierungsrate (PR) ergibt sich aus folgendem Quotienten:

$$PR = \frac{\widehat{LD_{50}}}{LD_{50}}.$$

In diesem steht die $LD_{50}$ für den im toxikologischen Versuch gemessenen Wert der Wirkstoffkombination, während $\widehat{LD_{50}}$ den erwarteten Wert der Kombination bedeutet, der durch folgende Gleichung erhalten wird:

$$\widehat{LD_{50}} = \frac{1}{\frac{\mu A}{LD_{50} A} + \frac{\mu B}{LD_{50} B}}.$$

Die Werte $\mu A$ und $\mu B$ bedeuten den Anteil der betreffenden Mischungskomponente am Gesamtgemisch.

PR-Werte von $>1$ zeigen Potenzierung zwischen den Mischungspartnern an.

[1]) Finney, D. J. 1952, Probit Analysis, 2nd Ed. Cambridge Univ. Press.

[2]) Banki, L. 1978, Bioassay of Pesticides in the Laboratory Research and Quality Control, p. 313, Akadémia Kiadó, Budapest.

Ergebnis

Tabelle 1

| Wirkstoff bzw. Wirkstoffgemisch | Gew.-Verhältnis des Gemisches | $LD_{50}$ ng/♀*) berechnet | gefunden | Cotox-Koeffizient |
|---|---|---|---|---|
| Verbindung I | – | – | 7 509 | – |
| Verbindung II | – | – | 14 527 | – |
| Verbindung III | – | – | 51,6 | – |
| | 1 000 : 1 | 6 587 | 2 567 | 2,6 |
| Verbindung I/ | 145 : 1 | 3 759 | 1 037 | 3,6 |
| Verbindung III | 30 : 1 | 1 344 | 467 | 2,9 |
| | 1 600 : 1 | 12 300 | 6 133 | 2,0 |
| Verbindung II/ | 280 : 1 | 7 254 | 2 654 | 2,7 |
| Verbindung III | 60 : 1 | 2 650 | 1 150 | 2,3 |

*) Musca domestica, Stamm R 300 (hochresistent).

Die gegenseitige Potenzierung zweier Wirkstoffe kann nach Loewe und Muischnek[1]) auch graphisch dargestellt werden. Dabei werden die $LD_{50}$-Werte beliebiger Mischungsverhältnisse mit Hilfe einer Isobolen, d. h. einer Kurve gleicher toxischer Wirkung, erfaßt. Bei additiver Wirkung der Kombinationspartner bewegen sich alle $LD_{50}$-Werte auf einer Geraden. Tritt jedoch Potenzierung auf, so weicht diese Kurve in Form einer Hyperbol von der Geraden ab, wobei die Abweichung mit der Potenzierung zunimmt.

Nach der Tabelle 1 stellen die Mischungsverhältnisse von Verb. I/Verb. III = 145 : 1 und von Verb. II/ Verb. III = 280 : 1 bevorzugte Ausführungsformen der vorliegenden Erfindung dar.

Die den erfindungsgemäßen Mitteln zugrundeliegenden Wirkstoffkombinationen werden erfindungsgemäß zusammen mit geeigneten Trägern und/oder Zuschlagstoffen eingesetzt. Geeignete Träger und Zuschlagstoffe sind fest oder flüssig und entsprechen den in der Formulierungstechnik üblichen Stoffen, wie z. B. natürlichen oder regenerierten Stoffen, Lösungs-, Dispergier-, Netz-, Haft-, Verdickungs- und/oder Bindemitteln.

Zur Applikation werden die Wirkstoffkombinationen erfindungsgemäß zu Stäubemitteln, Emulsionskonzentraten, Granulaten, Dispersionen, Aerosolen, Sprays, Lösungen oder Aufschlämmungen verarbeitet. Ferner werden wässerige Zubereitungen oder Konzentrate der Wirkstoffkombinationen erfindungsgemäß für Viehbäder (»dips«) und Sprühgänge (»spray-races«) sowie die Aufguß- (»pour on«-), die Handsprüh- (»hand-spray«-) und die Handwasch- (»handdressing«)-Methode verwendet.

Die Herstellung erfindungsgemäßer Mittel erfolgt durch inniges Vermischen und/oder Vermahlen der Wirkstoffkombinationen mit den geeigneten Trägerstoffen, gegebenenfalls unter Zusatz von gegenüber den Wirkstoffen inerten Dispergier- oder Lösungsmitteln. Die Wirkstoffkombinationen können in den folgenden Aufarbeitungsformen vorliegen und angewendet werden:

Feste Aufarbeitungsformen: Stäubemittel, Streumittel, Granulate;

Flüssige Aufarbeitungsformen:

a) in Wasser dispergierbare Wirkstoffkombinationskonzentrate:
   Spritzpulver (wettable powders) Pasten, Emulsionen;
b) Lösungen

[1]) Loewe, S. u. H. Muischnek, 1926, Über Kombinationswirkungen, Arch. exp. Path. Pharmak, 114, 313–326.

Der Gehalt an Wirkstoffkombination in den oben beschriebenen Applikationsformen liegt zwischen 1 und 90 Gew.-%.

Beispiel 2

Emulsionskonzentrat

| | |
|---|---|
| 20 Gew.-Teile | Wirkstoffkombination in |
| 70 Gew.-Teilen | Xylol gelöst und mit |
| 10 Gew.-Teilen | eines Emulgiermittels, bestehend aus einem Gemisch eines Arylphenylpolyglykoläthers und dem Calciumsalz der Dodecylbenzolsulfonsäure, versetzt. Das Emulsionskonzentrat kann in beliebigem Verhältnis mit Wasser versetzt werden und bildet dabei eine milchige Emulsion. |

Beispiel 3

Emulsionskonzentrat

| | |
|---|---|
| 5 bis max. 50 Gew.-Teile | Wirkstoffkombination, werden unter Rühren bei Zimmertemperatur in |
| 30 Gew.-Teilen | Dibutylphthalat |
| 10 Gew.-Teilen | Solvent 200® (niederviskoses hocharomat. Erdöldestillat) |
| 15 bis 35 Gew.-Teilen | Dutrex 238 FC® (viskoses hocharomat. Erdöldestillat) gelöst und mit |
| 10 Gew.-Teilen | eines Emulgatorgemisches, bestehend aus Ricinusöl-polyglykoläther und dem Calciumsalz der Dodecylbenzolsulfonsäure, versetzt. Das so erhaltene Emulsionskonzentrat gibt in Wasser milchige Emulsionen. |

Beispiel 4

Spritzpulver

| | |
|---|---|
| 5 bis 50 Gew.-Teile | Wirkstoffkombination werden in einer Mischapparatur mit |
| 5 Gew.-Teilen | eines aufsaugenden Trägermaterials (amorphe Kieselsäure oder Wessalon S®) und |
| 55 bis 80 Gew.-Teilen | eines Trägermaterials (Bolus alba oder Kaolin B 24®) und einem Dispergiermittelgemisch, bestehend aus |
| 5 Gew.-Teilen | eines Na-lauryl-sulfonates und |
| 5 Gew.-Teilen | eines Alkyl-aryl-polyglykoläthers, intensiv vermischt. Diese Mischung wird auf einer Stift- oder Luftstrahlmühle bis auf 5—15 µm gemahlen. Das so erhaltene Spritzpulver gibt in Wasser eine gute Suspension. |

Beispiel 5

Stäubemittel

| | |
|---|---|
| 5 Gew.-Teile | Wirkstoffkombination werden mit |
| 2 Gew.-Teilen | einer gefällten Kieselsäure und |
| 92 Gew.-Teilen | Talk intensiv gemischt. |

Die erfindungsgemäßen Mittel besitzen eine besondere Eignung zur Bekämpfung von Vorrats- und Speicherschädlingen, da sie die für den Vorratsschutz notwendigen Erfordernisse in hohem Maße erfüllen. So zeichnen sie sich durch folgende Eigenschaften aus:

Niedrige letale Minimumkonzentration für Schädlinge (besonders für resistente Formen), geringe Toxizität gegenüber Menschen und Nutztieren, mehrmonatige gleichmäßige Wirkungsdauer, keine Rückstandsprobleme.

Dank dieser Eigenschaften können mit den erfindungsgemäßen Mitteln beispielsweise folgende typische Vorrats- bzw. Getreideschädlingen erfolgreich bekämpft werden:

| | |
|---|---|
| Oryzaephilus surinamensis | Getreideschmalkäfer |
| Trogoderma granarium | Khaprakäfer |
| Lasioderma serricorne | Tabakkäfer |
| Chryptolestes ferrugineus | Leisten-Kopf-Plattkäfer |

| | |
|---|---|
| Stegobium paniceum | Brotkäfer |
| Necrobia rufipes | Koprakäfer |
| Anthrenus vorax | Teppichkäfer |
| Sitophilus granarius | Kornkäfer |
| Sitophilus oryzae | Reiskäfer |
| Sitophilus zea mais | Maiskäfer |
| Rhizopertha dominica | Getreidekapuziner |
| Acanthoselides obtectus | Speisebohnenkäfer |
| Sitotroga cerealella | Getreidemotte |
| Nemapagon granellus | Kornmotte |
| Tyrophagus putrescentiae | Nahrungs- und Futtermilbe |
| Acarus siro | Mehlmilbe |
| Ephestia kuehniella | Mehlmotte |
| Araeocerus fasciculatus | Kaffeebohnenkäfer |
| Carpophilus hemipterus | Backobstkäfer |
| Tenebrio molitor | Mehlkäfer |
| Tribolium castaneum | Reismehlkäfer |
| Tribolium destructor | Schwarzbrauner Mehlkäfer |
| Tribolium confusum | Amerik. Reismehlkäfer |

sowie die Schaben:

| | |
|---|---|
| Phyllodromia germanica | Deutsche Küchenschabe |
| Periplaneta americana | Amerikanische Küchenschabe |
| Blatta orientalis | Russische Küchenschabe |

Die weitere Bedeutung der vorliegenden Erfindung besteht darin, daß die erfindungsgemäßen Mittel auch erfolgreich gegen Hygieneschädlinge, wie beispielsweise Fliegen und Fliegenlarven sowie Mükken und Mückenlarven, eingesetzt werden können und somit durch die Verhinderung der Ausbreitung von Krankheiten einen wichtigen Beitrag zur Gesunderhaltung von Mensch und Tier leisten. Darüber hinaus wird durch den Einsatz der erfindungsgemäßen Mittel in der Landwirtschaft der Ertrag der Nutztiere bedeutend verbessert.

## Patentansprüche

1. Schädlingsbekämpfungsmittel, welches neben einem oder mehreren inerten Zusatzstoffen eine synergistisch wirksame Wirkstoffkombination enthält, dadurch gekennzeichnet, daß die Wirkstoffkombination einerseits entweder aus der Verbindung der Formel I

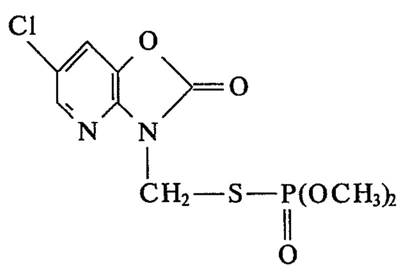

(I)

oder aus der Verbindung der Formel II

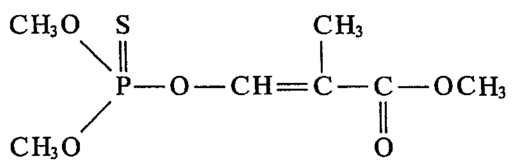

(II)

und andererseits aus der Verbindung der Formel III

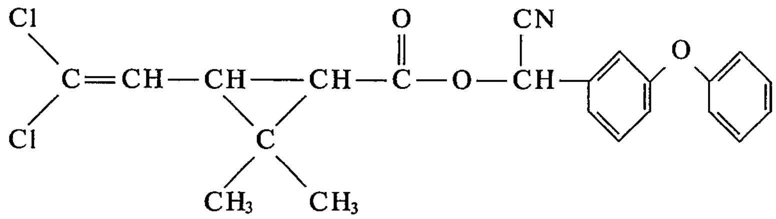

(III)

besteht.

2. Schädlingsbekämpfungsmittel nach Anspruch 1 enthaltend die Wirkstoffkombination der Verbindungen I und III.

3. Schädlingsbekämpfungsmittel nach Anspruch 1 enthaltend die Wirkstoffkombination der Verbindungen II und III.

4. Mittel nach Anspruch 2, dadurch gekennzeichnet, daß die Wirkstoffkombination ein Gewichtsverhältnis der Verbindung der Formel I zur Verbindung der Formel III von 5000:1 bis 1:1 aufweist.

5. Mittel nach Anspruch 2, dadurch gekennzeichnet, daß die Wirkstoffkombination ein Gewichtsverhältnis der Verbindung der Formel I zur Verbindung der Formel III von 1500:1 bis 1:1 aufweist.

6. Mittel nach Anspruch 2, dadurch gekennzeichnet, daß die Wirkstoffkombination ein Gewichtsverhältnis der Verbindung der Formel I zur Verbindung der Formel III von 300:1 bis 1:1 aufweist.

7. Mittel nach Anspruch 3, dadurch gekennzeichnet, daß die Wirkstoffkombination ein Gewichtsverhältnis der Verbindung der Formel II zur Verbindung der Formel III von 3500:1 bis 1:1 aufweist.

8. Mittel nach Anspruch 3, dadurch gekennzeichnet, daß die Wirkstoffkombination ein Gewichtsverhältnis der Verbindung der Formel II zur Verbindung der Formel III von 1000:1 bis 1:1 aufweist.

9. Mittel nach Anspruch 3, dadurch gekennzeichnet, daß die Wirkstoffkombination ein Gewichtsverhältnis der Verbindung der Formel II zur Verbindung der Formel III von 500:1 bis 1:1 aufweist.

10. Verfahren zur Bekämpfung von Schädlingen unter Verwendung eines Mittels gemäß den Ansprüchen 1 bis 9.

11. Verfahren zur Bekämpfung von Insekten gemäß Anspruch 10.

12. Verfahren zur Bekämpfung von Vertretern der Ordnung Acarina gemäß Anspruch 10.

13. Verfahren zur Bekämpfung von Vorrats- und Speicherschädlingen gemäß Anspruch 10.

14. Verfahren zur Bekämpfung von Hygieneschädlingen gemäß Anspruch 10.

15. Verfahren zur Bekämpfung von Fliegen und Fliegenlarven gemäß den Ansprüchen 10 und 14.

16. Verfahren zur Bekämpfung von Schaben gemäß den Ansprüchen 10 und 14.

## Claims

1. A pesticidal composition which contains, besides one or more inert additives, a synergistically effective active-substance combination comprising on the one hand either the compound of the formula I

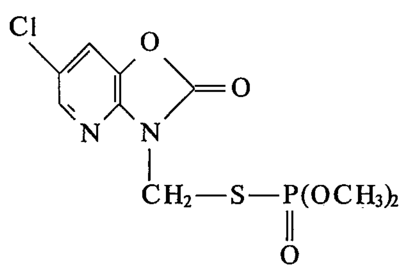

(I)

or the compound of the formula II

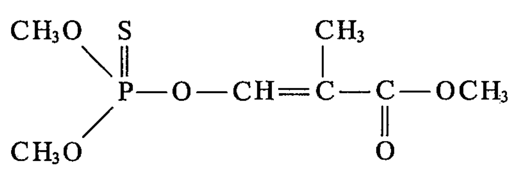

(II)

and on the other hand the compound of the formula III

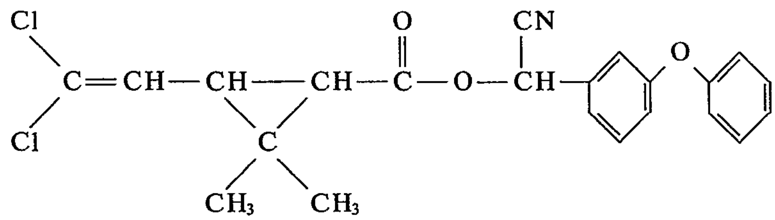

(III)

2. A pesticidal composition according to claim 1 which contains the active-substance combination of the compounds I and III.

3. A pesticidal composition according to claim 1 which contains the active-substance combination of the compounds II and III.

4. A composition according to claim 2, wherein the active-substance combination has a weight ratio of the compound of the formula I to the compound of the formula III of 5000:1 to 1:1.

5. A composition according to claim 2, wherein the active-substance combination has a weight ratio of the compound of the formula I to the compound of the formula III of 1500:1 to 1:1.

6. A composition according to claim 2, wherein the active-substance combination has a weight ratio of the compound of the formula I to the compound of the formula III of 300:1 to 1:1.

7. A composition according to claim 3, wherein the active-substance combination has a weight ratio of the compound of the formula II to the compound of the formula III of 3500:1 to 1:1.

8. A composition according to claim 3, wherein the active-substance combination has a weight ratio of the compound of the formula II to the compound of the formula III of 1000:1 to 1:1.

9. A composition according to claim 3, wherein the active-substance combination has a weight ratio of the compound of the formula II to the compound of the formula III of 500:1 to 1:1.

10. A method of controlling pests, which comprises the use of a composition according to any one of claims 1 to 9.

11. A method according to claim 10 of controlling insects.

12. A method according to claim 10 of controlling members of the order Acarina.

13. A method according to claim 10 of controlling storage pests and granary pests.

14. A method according to claim 10 of controlling hygiene pests.

15. A method according to either of claims 10 or 14 of controlling flies and fly larvae.

16. A method according to either of claims 10 or 14 of controlling cockroaches.

**Revendications**

1. Produit pesticide contenant, avec un ou plusieurs additifs inertes, une combinaison synergétique de substances actives, caractérisé en ce que la combinaison de substances actives consiste d'une part soit en le composé de formule I

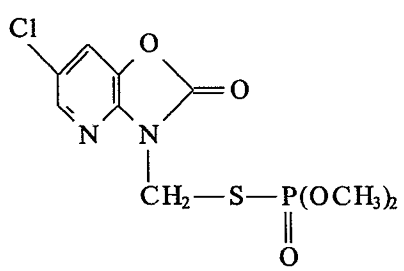

(I)

soit en le composé de formule II

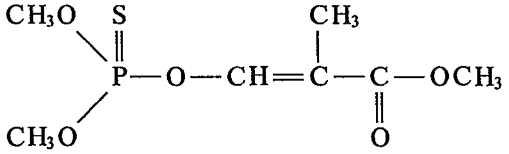

(II)

et d'autre part en le composé de formule III

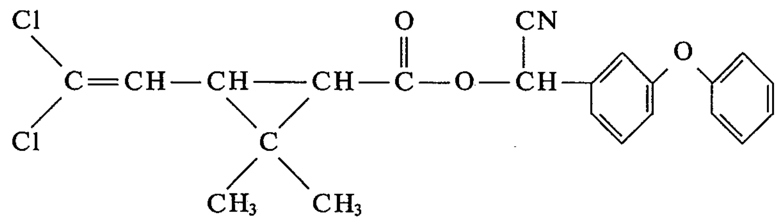

(III)

2. Produit pesticide selon la revendication 1, contenant la combinaison active des composés I et III.

3. Produit pesticide selon la revendication 1, contenant la combinaison active des composés II et III.

4. Produit selon la revendication 2, caractérisé en ce que la combinaison de substances actives contient le composé de formule I et le composé de formule III dans des proportions relatives en poids de 5000:1 à 1:1.

5. Produit selon la revendication 2, caractérisé en ce que la combinaison de substances actives contient le composé de formule I et le composé de formule III dans des proportions relatives en poids de 1500:1 à 1:1.

6. Produit selon la revendication 2, caractérisé en ce que la combinaison de substances actives contient le composé de formule I et le composé de formule III dans des proportions relatives en poids de 300:1 à 1:1.

7. Produit selon la revendication 3, caractérisé en ce que la combinaison de substances actives contient le composé de formule II et le composé de formule III dans des proportions relatives en poids de 3500:1 à 1:1.

8. Produit selon la revendication 3, caractérisé en ce que la combinaison de substances actives contient le composé de formule II et le composé de formule III dans des proportions relatives en poids de 1000:1 à 1:1.

9. Produit selon la revendication 3, caractérisé en ce que la combinaison de substances actives contient le composé de formule II et le composé de formule III dans des proportions relatives en poids de 500:1 à 1:1.

10. Procédé pour combattre les parasites par l'utilisation d'un produit selon les revendications 1 à 9.

11. Procédé pour combattre les insectes selon la revendication 10.

12. Procédé pour combattre les représentants de l'ordre des acariens selon la revendication 10.

13. Procédé pour combattre les parasites des réserves et des stocks selon la revendication 10.

14. Procédé pour combattre les parasites de l'hygiène selon la revendication 10.

15. Procédé pour combattre les mouches et larves de mouches selon les revendication 10 et 14.

16. Procédé pour combattre les blattes selon les revendications 10 et 14.